# EUROPÄISCHE PATENTSCHRIFT

(11) **EP 3 232 173 B1**
(45) Veröffentlichungstag und Bekanntmachung des Hinweises auf die Patenterteilung: **26.09.2018**
(21) Anmeldenummer: 16164735.9
(22) Anmeldetag: 11.04.2016
(51) Int. Cl.: G01L 13/02, G01L 13/04, G01L 19/04

(54) **DIFFERENZDRUCKSENSOR**
DIFFERENTIAL PRESSURE SENSOR
CAPTEUR DE PRESSION DIFFÉRENTIELLE

(43) Veröffentlichungstag der Anmeldung: 18.10.2017
(73) Patentinhaber: VEGA Grieshaber KG, 77709 Wolfach (DE)
(72) Erfinder: Hengstler, Clemens, 77716 Haslach (DE)
(74) Vertreter: Westphal, Mussgnug & Partner Patentanwälte mbB

(56) Entgegenhaltungen:
- DE-A1-102012 113 042
- US-A1- 2013 233 085

## Beschreibung

Die vorliegende Erfindung betrifft einen Differenzdrucksensor mit wenigstens einer Differenzdruckmesszelle, wenigstens einem ersten Druckmittler sowie wenigstens einer ersten Messleitung zur Übertragung eines auf den ersten Druckmittler wirkenden ersten Drucks zu der Differenzdruckmesszelle.

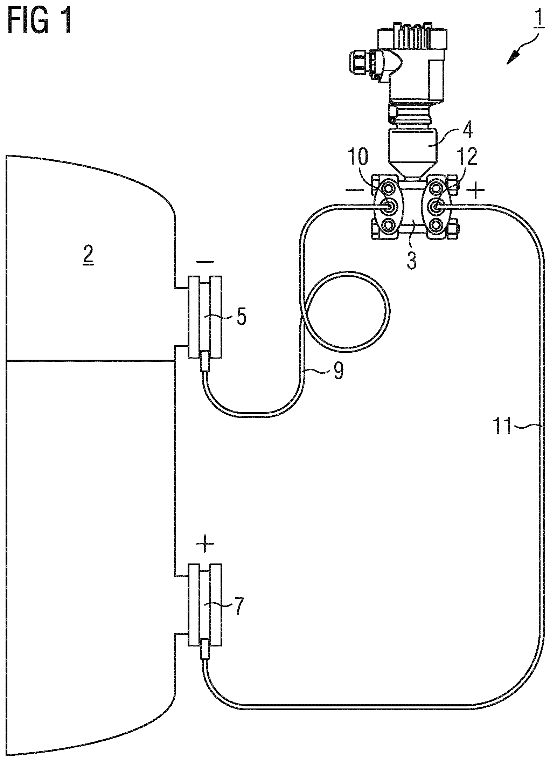

Differenzdrucksensoren sind grundsätzlich aus dem Stand der Technik bekannt und dienen zur möglichst genauen Erfassung von Druckunterschieden zwischen zwei Positionen in der Messumgebung. Häufig ist eine oder beide der Seiten über einen Druckmittler an die Differenzdruckmesszelle angeschlossen. Ein solcher bekannter Aufbau ist beispielhaft in Figur 1 dargestellt.

Figur 1 zeigt einen Differenzdrucksensor 1 mit einer in einem Gehäuse 4 angeordneten Differenzdruckmesszelle 3. Die Differenzdruckmesszelle 3 ist über zwei Eingänge 10, 12, die von zwei Druckmittlern 5, 7 erfassten Drücke über korrespondierende Messleitungen 9, 11 zugeführt. Die Differenzdruckmesszelle 3 ist damit einerseits über eine erste Messleitung 9 mit einem ersten Druckmittler 5 verbunden, der vorliegend in einem oberen Bereich eines Tanks 2 angeordnet ist. Andererseits ist die Differenzdruckmesszelle 3 über eine zweite Messleitung 11 mit einem zweiten Druckmittler 7 verbunden, der, wie in Figur 1 dargestellt, in einem unteren Bereich des Tanks 2 angeordnet ist.

Die Druckmittler 5, 7 sind im vorliegenden Ausführungsbeispiel jeweils als mit einer drucksensitiven Membran versehene Elemente ausgestaltet, die über die Messleitungen 9, 11 mit der Differenzdruckmesszelle 3 verbunden sind. Über ein in den Druckmittlern 5, 7 sowie den Messleitungen 9, 11 angeordnetes inkompressibles Übertragungsmedium wird ein auf die Druckmittler 5, 7 wirkender Prozessdruck P1, P2 zu der jeweiligen Seite 10, 12 der Differenzdruckmesszelle 3 übertragen und kann von dieser detektiert werden.

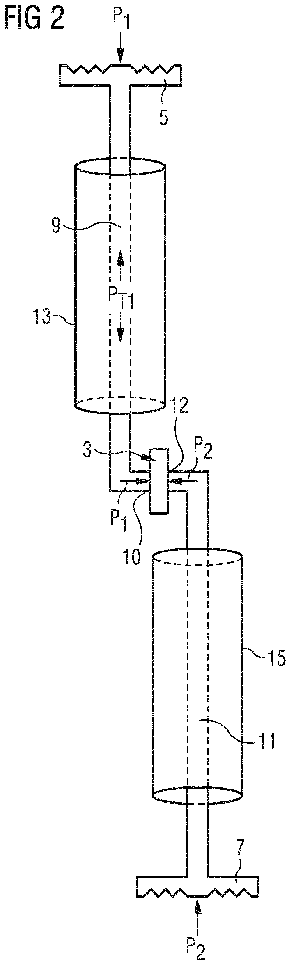

Figur 2 zeigt eine Prinzipskizze des in Figur 1 dargestellten Differenzdrucksensors 1.

Gemäß dem vorliegenden Ausführungsbeispiel ist die Differenzdruckmesszelle 3 mit ihrer ersten Seite 10 über eine erste Messleitung 9 mit einem ersten Druckmittler 5, auf den ein erster Prozessdruck P1 wirkt, verbunden. Die erste Messleitung 9 ist in einer ersten Ummantelung 13 angeordnet, die als mechanischer Schutz für die erste Messleitung 9 ausgebildet ist.

Die zweite Seite 12 der Differenzdruckmesszelle 3 ist über die zweite Messleitung 11 mit dem zweiten Druckmittler 7 verbunden, auf den ein zweiter Prozessdruck P2 wirkt. Die zweite Messleitung 11 ist im vorliegenden Ausführungsbeispiel in einer zweiten Ummantelung 15 angeordnet, die ebenfalls als mechanischer Schutz für die zweite Messleitung 11 wirkt.

Bei dem aus dem Stand der Technik bekannten Differenzdrucksensoren der vorstehend beschriebenen Bauart wird es als nachteilig empfunden, dass zusätzliche Temperatureinwirkungen außerhalb der Prozessumgebung, beispielsweise auf die Messleitung und/oder mechanische Einwirkungen auf die Messleitung, beispielsweise durch starkes Abknicken, das Messergebnis verfälschen können. Ferner ist es als nachteilig bekannt, dass die auf den Druckmittler einwirkende Prozesstemperatur ebenfalls Messfehler verursacht. Die temperaturinduzierten Messfehler reduzieren dabei auf einer Ausdehnung des in dem Druckmittler und der Messleitung enthaltenen Übertragungsmediums, die zu einer Druckwirkung auf die Druckmesszelle führt.

Im Stand der Technik ist es bekannt, solche temperaturinduzierten Messfehler mittels Temperatursensoren im Druckmittler und/oder der Druckmesszelle zu erfassen und elektronisch zu kompensieren. Das Vorsehen zusätzlicher Temperatursensoren, idealerweise am Druckmittler und an der Druckmesszelle, wird jedoch aufgrund des erhöhten Verdrahtungsaufwandes sowie der zusätzlichen Kosten für die zusätzlich notwendigen Sensoren als nachteilig empfunden.

Es ist die Aufgabe der vorliegenden Erfindung, einen Differenzdrucksensor gemäß dem Stand der Technik derart weiterzubilden, dass eine Kompensation temperaturinduzierter oder mechanisch induzierter Messfehler kostengünstig und exakt möglich ist.

Ein erfindungsgemäßer Differenzdrucksensor weist wenigstens eine Differenzdruckmesszelle, einen ersten Druckmittler, eine erste Messleitung zur Übertragung eines auf den ersten Druckmittler wirkenden ersten Drucks zu einer ersten Seite der Differenzdruckmesszelle, einen zweiten Druckmittler, sowie eine zweite Messleitung zur Übertragung eines auf den zweiten Druckmittler wirkenden zweiten Drucks zu einer zweiten Seite der Differenzdruckmesszelle auf. Solche Differenzdrucksensoren sind beispielweise aus DE 10 2012 113 042 A1 oder US 2013/0233085 bekannt. Der erfindungsgemäße Differenzdrucksensor zeichnet sich dadurch aus, dass der Differenzdrucksensor wenigstens eine erste Kompensationsleitung zur Kompensation von thermisch und mechanisch induzierten Messfehlern mit gleichen thermischen und mechanischen Eigenschaften wie die erste Messleitung aufweist, die parallel zu der ersten Messleitung angeordnet und mit der zweiten Seite der Differenzdruckmesszelle verbunden ist, wobei die erste Messleitung und die erste Kompensationsleitung derart angeordnet sind, dass eine auf die Messleitung wirkende Temperatur und/oder eine auf die Messleitung wirkende mechanische Einwirkung gleichermaßen auf die Kompensationsleitung wirkt.

Der vorliegenden Erfindung liegt damit die Erkenntnis zugrunde, dass eine präzise und kostengünstige Kompensation von thermisch und mechanisch induzierten Messfehlern besonders einfach durch eine Kompensation des Messfehlers auf mechanische Art und Weise erfolgen kann, wobei damit vorzugweise nachfolgende aufwändige elektronische Kompensationsvorrichtungen entfallen können oder zumindest deutlich günstiger ausgestaltet werden können.

Durch die erfindungsgemäß vorgesehene erste Kompensationsleitung, die die gleichen Eigenschaften wie die Messleitung aufweist und parallel zu der Messleitung angeordnet ist, wird erreicht, dass eine auf die Messleitung wirkende Temperatur und/oder eine auf die Messleitung wirkende mechanische Einwirkung gleichermaßen auf die Kompensationsleitung wirkt. Dadurch, dass die erste Messleitung und die erste Kompensationsleitung gleiche Eigenschaften aufweisen, das bedeutet insbesondere gleiche thermische und mechanische Eigenschaften aufweisen, werden durch äußere Einflüsse gleiche Wirkungen in den beiden Leitungen hervorgerufen, sodass ein Messfehler, der in der Messleitung auftritt, insbesondere eine Druckänderung, gleichermaßen in der Kompensationsleitung hervorgerufen wird. Eine Kompensation des Messfehlers kann damit auf einfache mechanische Weise durch Zuführung des Messfehlers zur zweiten Seite der Differenzdruckmesszelle erfolgen.

In einer Weiterbildung kann der Differenzdrucksensor eine zweite Kompensationsleitung zur Kompensation von thermisch und mechanisch induzierten Messfehlern mit gleichen thermischen und mechanischen Eigenschaften wie die zweite Messleitung aufweisen, wobei die zweite Kompensationsleitung vorzugsweise parallel zu der zweiten Messleitung angeordnet und mit der ersten Seite der Differenzdruckmesszelle verbunden ist, wobei die erste Messleitung und die erste Kompensationsleitung derart angeordnet sind, dass eine auf die Messleitung wirkende Temperatur und/oder eine auf die Messleitung wirkende mechanische Einwirkung gleichermaßen auf die Kompensationsleitung wirkt.

Durch das Vorsehen eines zweiten Druckmittlers sowie einer zweiten Messleitung und einer zweiten Kompensationsleitung kann der für Differenzdrucksensoren typische Anwendungsfall abgebildet werden, dass beide Seiten der Differenzdruckmesszelle jeweils über eine Messleitung und einen Druckmittler mit dem jeweiligen Prozessdruck beaufschlagt werden. Dies ist insbesondere dann der Fall, wenn der Differenzdrucksensor in Messumgebungen mit hohen Temperaturen, die beispielsweise für eine Messelektronik des Differenzdrucksensors schädlich sein können, angeordnet ist.

Der ersten Seite der Differenzdruckmesszelle ist dementsprechend der von dem ersten Druckmittler zur Verfügung gestellte erste Messdruck, der in der ersten Messleitung entstehende Messfehler sowie der in der zweiten Kompensationsleitung entstehende Messfehler zugeführt, während der zweiten Seite der Differenzdruckmesszelle der von dem zweiten Druckmittler zur Verfügung gestellte zweite Druck, der in der zweiten Messleitung entstehende Messfehler sowie der in der ersten Kompensationsleitung entstehende Messfehler zugeführt ist. In einer Gegenüberstellung der auf die Differenzdruckmesszelle wirkenden Drücke kann leicht gesehen werden, dass sich die jeweils wirkenden Messfehler gegenseitig kompensieren und damit der Differenzdruckmesszelle lediglich die jeweiligen Messdrücke zugeführt werden.

Eine besonders exakte Nachbildung der auftretenden Messfehler kann erreicht werden, wenn die erste Kompensationsleitung und/oder die zweite Kompensationsleitung mit einem den zugeordneten Druckmittler nachbildenden druckinsensitiven Element verbunden ist, das den Prozessbedingungen in gleicher Weise wie der zugeordnete Druckmittler ausgesetzt ist. Dadurch, dass zusätzlich zu einer Kompensationsleitung ein den Druckmittler nachbildendes druckinsensitives Element vorgesehen wird, das den Prozessbedingungen in gleicher Weise wie der Druckmittler ausgesetzt ist, kann ein Einfluss der Prozesstemperatur auf das Übertragungsmedium auch in der Kompensationsleitung sehr exakt nachgebildet werden, sodass auch durch die Prozesstemperatur verursachte Messfehler kompensiert werden können.

Eine besonders geschickte Anordnung des Druckmittlers und des den Druckmittler nachbildenden druckinsensitiven Elementes kann erreicht werden, wenn das druckinsensitive Element und der Druckmittler gemeinsam in einen Prozessanschluss zur Anordnung des Druckmittlers in der Prozessumgebung integriert sind. Durch eine solche gemeinsame Integration kann ferner eine Vergleichmäßigung der Einwirkung der Prozesstemperatur auf den Druckmittler und das druckinsensitive Element erreicht werden.

Eine besonders platzsparende Anordnung, mit der auch eine möglichst gleichmäßige Temperatureinwirkung auf den Druckmittler und das druckinsensitive Element erreicht wird, ist gegeben, wenn das druckinsensitive Element den Druckmittler ringförmig umgebend ausgebildet ist. Eine solche Anordnung bietet sich an, da der Druckmittler in der Regel eine kreisförmig ausgebildete Membran zur Aufnahme des Drucks in der Prozessumgebung aufweist.

Um eine möglichst gleichmäßige Temperatureinwirkung auf den Druckmittler und das druckinsensitive Element zu erreichen, ist es vorteilhaft, wenn das druckinsensitive Element eine zum Prozess weisende Fläche einer Größe aufweist, die einer Größe einer zum Prozess weisenden Fläche des zugeordneten Druckmittlers im Wesentlichen entspricht, vorzugsweise mit dieser identisch ist. In einer konkreten Ausgestaltung ist dabei die den Druckmittler umgebende Ringfläche des druck-insensitiven Elements identisch zur Membranfläche des zugeordneten Druckmittlers.

Temperatureinwirkungen und mechanische Einwirkungen, die auf die zwischen den Druckmittlern und den Druckmesszellen angeordnete Mess- und Kompensationsleitung wirken, können besonders gut kompensiert werden, wenn die erste Messleitung und die erste Kompensationsleitung und/oder die zweite Messleitung und die zweite Kompensationsleitung jeweils in einer gemeinsamen, vorzugsweise als mechanischer Schutz ausgebildeten Ummantelung angeordnet sind. Durch eine entsprechende gemeinsame Ummantelung werden Temperatureinflüsse gleichmäßig auf die Messleitung und die Kompensationsleitung verteilt, sodass Temperatureinwirkungen auf beide Leitungen in gleicher Weise wirken. Durch einen mechanischen Schutz werden mechanische Einwirkungen, beispielsweise zu enge Radien oder Knicke, ebenfalls auf beide Leitungen übertragen, sodass dadurch induzierte Messfehler ebenfalls in beiden Leitungen gleichzeitig wirken und an der Differenzdruckmesszelle kompensiert werden können.

Die zuvor beschriebene Kompensation von Messfehlern kann dann besonders exakt erreicht werden, wenn die erste Messleitung und die erste Kompensationsleitung und/oder die zweite Messleitung und die zweite Kompensationsleitung einen identischen Leitungsquerschnitt und/oder eine identische Länge und/oder ein identisches Volumen und/oder eine identische thermische Leitfähigkeit und/oder eine identische Füllung und/oder aufweisen. Durch ein Übereinstimmen dieser Eigenschaften wird erreicht, dass insbesondere Temperatureinwirkungen, aber auch mechanische Einwirkungen, sowohl in der Messleitung als auch in der Kompensationsleitung jeweils identische oder zumindest möglichst gleich große Druckänderungen und damit Messfehler hervorrufen.

Die vorliegende Erfindung wird nachfolgend unter Bezugnahme auf Ausführungsbeispiele anhand der beigefügten Figuren eingehend erläutert. Es zeigen:
- Figur 1: einen Differenzdrucksensor gemäß dem Stand der Technik (schon behandelt),
- Figur 2: eine Prinzipskizze des Differenzdrucksensors aus Figur 1 (schon behandelt),
- Figur 3: eine Prinzipskizze eines Differenzdrucksensors gemäß der vorliegenden Anmeldung und
- Figur 4: eine Weiterbildung des Differenzdrucksensors aus Figur 3.

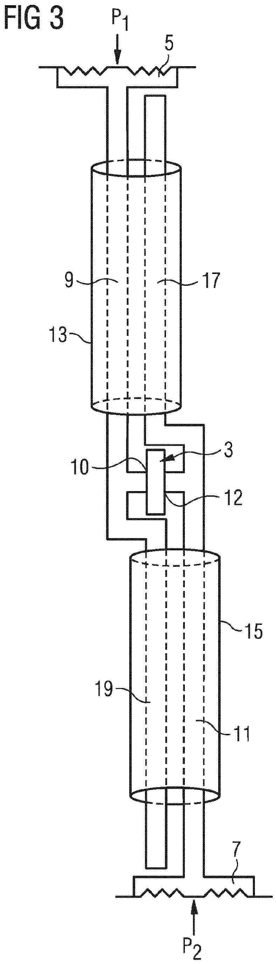

Figur 3 zeigt ein erstes Ausführungsbeispiel eines Differenzdrucksensors 1 gemäß der vorliegenden Anmeldung. Der Differenzdrucksensor 1 weist als zentrales Element eine Differenzdruckmesszelle 3 auf, deren erste Seite 10 über eine erste Messleitung 9 mit einem ersten Druckmittler 5, auf den ein erster Messdruck P1 wirkt, verbunden ist. Der auf den ersten Druckmittler 5 wirkende erste Messdruck P1 wird von einer Membran des ersten Druckmittlers 5 aufgenommen und über ein in dem ersten Druckmittler 5 und der ersten Übertragungsleitung 9 befindliches inkompressibles Übertragungsmedium, typischerweise ein Öl, zu der ersten Seite 10 der Differenzdruckmesszelle 3 übertragen.

Zur Kompensation von im Bereich der ersten Messleitung 9 durch Temperatureinwirkung oder mechanische Einwirkung auftretenden Messfehlern ist eine zweite Seite 12 der Differenzdruckmesszelle 3 mit einer ersten Kompensationsleitung 17, die die gleichen Eigenschaften wie die erste Messleitung 9 aufweist und parallel zu dieser angeordnet ist, verbunden. Die erste Messleitung 9 und die erste Kompensationsleitung 17 sind ferner in einer gemeinsamen ersten Ummantelung 13 angeordnet, die ferner als mechanischer Schutz für die beiden Leitungen 9, 17 ausgebildet ist. Durch die gemeinsame erste Ummantelung 13 ist außerdem sichergestellt, dass im Bereich der Leitungen 9, 17 einwirkende Temperatureinflüsse oder mechanische Einflüsse gleichermaßen auf die erste Messleitung 9 und die erste Kompensationsleitung 17 einwirken und damit in beiden Leitungen 9, 17 identische Druckänderungen hervorrufen.

Wie Figur 3 zu entnehmen ist, ist die zweite Seite 12 der Differenzdruckmesszelle 3 mit einer zweiten Messleitung 11, die mit einem zweiten Druckmittler 7 verbunden ist, gekoppelt. Parallel zu der zweiten Messleitung 11 ist - analog zur Ausgestaltung bezüglich des ersten Druckmittlers 5 - eine zweite Kompensationsleitung 19 angeordnet und befindet sich mit dieser in einer gemeinsamen zweiten Ummantelung 15. Die zweite Kompensationsleitung 19 ist mit der ersten Seite 10 der Differenzdruckmesszelle 3 verbunden.

Durch die vorliegende Anordnung ist sichergestellt, dass im Bereich der Leitungen 9, 17, 11, 19 durch Temperatureinwirkungen oder mechanische Einwirkungen auftretende Messfehler jeweils auf die Messleitung 9, 11 sowie deren zugeordnete Kompensationsleitungen 17, 19 gleichermaßen einwirken und den unterschiedlichen Seiten 10, 12 der Differenzdruckmesszelle 3 zugeführt werden. Dadurch, dass die Messfehler den jeweils gegenüberliegenden Seiten der Differenzdruckmesszelle 3 zugeführt werden, werden diese auf rein mechanische Art und Weise innerhalb der Differenzdruckmesszelle 3 kompensiert, sodass dieser letztendlich effektiv nur der erste Prozessdruck P1 und der zweite Prozessdruck P2 zugeführt werden.

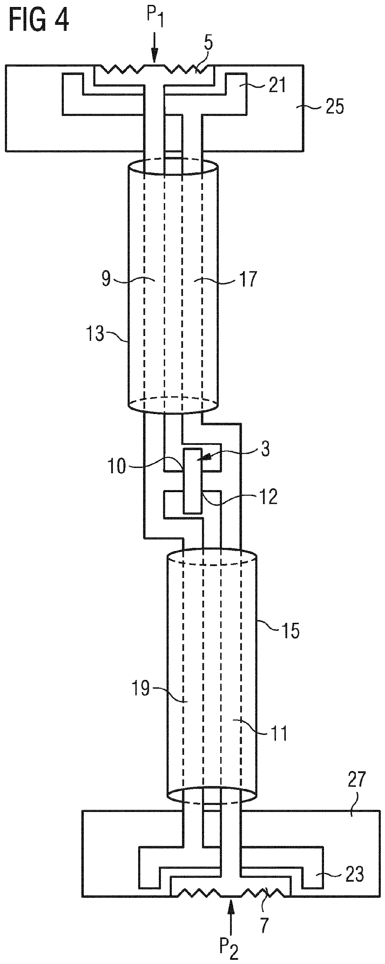

Figur 4 zeigt eine Weiterbildung des Differenzdrucksensors 1 aus Figur 3, wobei die erste Kompensationsleitung 17 im vorliegenden Ausführungsbeispiel mit einem ersten druckinsensitiven Element 21 verbunden ist, das den ersten Druckmittler 5 ringförmig umgebend ausgebildet und mit diesem in einen ersten Prozessanschluss 25 integriert ist. Analog hierzu ist die zweite Kompensationsleitung 19 mit einem zweiten druckinsensitiven Element 23 verbunden, das den zweiten Druckmittler 7 ringförmig umgebend ausgebildet und mit diesem in einem zweiten Prozessanschluss 27 integriert ist. Durch Vorsehen entsprechender druckinsensitiver Element 21, 23 kann sichergestellt werden, dass eine auf die Druckmittler 5, 7 wirkende Prozesstemperatur nicht nur in die jeweiligen Messzweige, sondern auch gleichermaßen in die Kompensationszweige eingekoppelt und ein hierdurch hervorgerufener Messfehler somit gleichermaßen in beiden Zweigen hervorgerufen wird. Durch die Integration der Druckmittler 5, 7 und der druckinsensitiven Elemente 21, 23 in jeweils einen Prozessanschluss 25, 27 wird ferner eine einfache Anordnung der Druckmittler 5, 7 und der druckinsensitiven Elemente 21, 23 in der Prozessumgebung ermöglicht. Die druckinsensitiven Elemente 21, 23 sind in dem vorliegenden Ausführungsbeispiel jeweils derart ausgestaltet, dass die Größe einer zum Prozess hinweisenden Fläche der druckinsensitiven Elemente 21, 23 der Größe der Fläche der Membran des zugeordneten Druckmittels 5, 7 entspricht. Auf diese Weise wirkt die Prozesstemperatur in gleicher Weise sowohl auf das druckinsensitive Element 21, 23 als auch auf den Druckmittler 5, 7.

Es sei an dieser Stelle angemerkt, dass die zuvor beschriebenen Maßnahmen jeweils nur in einem oder auch in beiden Zweigen der Differenzdruckmesszelle vorgesehen sein können, eine besonders gute Fehlerkompensation jedoch insbesondere dann erreicht wird, wenn die vorgestellten Maßnahmen in beiden Messzweigen umgesetzt werden.

### Bezugszeichenliste

- 1: Differenzdrucksensor
- 2: Tank
- 3: Differenzdruckmesszelle
- 4: Gehäuse
- 5: Erster Druckmittler
- 7: Zweiter Druckmittler
- 9: Erste Messleitung

- 10: Erste Seite
- 11: Zweite Messleitung
- 12: Zweite Seite
- 13: Erste Ummantelung
- 15: Zweite Ummantelung
- 17: Erste Kompensationsleitung
- 19: Zweite Kompensationsleitung

- 21: Erstes druckinsensitives Element
- 23: Zweites druckinsensitives Element
- 25: Erster Prozessanschluss
- 27: Zweiter Prozessanschluss

- P1: Erster Druck
- P2: Zweiter Druck

## Patentansprüche

1. Differenzdrucksensor (1) mit wenigstens einer Differenzdruckmesszelle (3), einem ersten Druckmittler (5), einer ersten Messleitung (9) zur Übertragung eines auf den ersten Druckmittler (5) wirkenden ersten Drucks (P1) zu einer ersten Seite (10) der Differenzdruckmesszelle (3), einem zweiten Druckmittler (7), sowie einer zweiten Messleitung (11) zur Übertragung eines auf den zweiten Druckmittler (7) wirkenden zweiten Drucks (P2) zu einer zweiten Seite (12) der Differenzdruckmesszelle (3),
**dadurch gekennzeichnet, dass** der Differenzdrucksensor (1) wenigstens eine erste Kompensationsleitung (17) zur Kompensation von thermisch und mechanisch induzierten Messfehlern aufweist, die parallel zu der ersten Messleitung (9) angeordnet ist und mit der zweiten Seite (12) der Differenzdruckmesszelle (3) verbunden ist, wobei die erste Kompensationsleitung (17) gleiche thermische und mechanische Eigenschaften wie die erste Messleitung (9) aufweist, wobei die erste Messleitung (9) und die erste Kompensationsleitung (17) derart angeordnet sind, dass eine auf die erste Messleitung (9) wirkende Temperatur und/oder eine auf die erste Messleitung (9) wirkende mechanische Einwirkung gleichermaßen auf die Kompensationsleitung (17) wirkt.

2. Differenzdrucksensor (1) gemäß Anspruch 1,
**dadurch gekennzeichnet, dass** der Differenzdrucksensor (1) eine zweite Kompensationsleitung (19) zur Kompensation von thermisch und mechanisch induzierten Messfehlern mit gleichen thermischen und mechanischen Eigenschaften wie die zweite Messleitung (11) aufweist, die parallel zu der zweiten Messleitung (11) angeordnet ist, wobei die zweite Messleitung (11) und die zweite Kompensationsleitung (19) derart angeordnet sind, dass eine auf die zweite Messleitung (11) wirkende Temperatur und/oder eine auf die zweite Messleitung (11) wirkende mechanische Einwirkung gleichermaßen auf die Kompensationsleitung (19) wirkt.

3. Differenzdrucksensor (1) gemäß einem der vorhergehenden Ansprüche,
**dadurch gekennzeichnet, dass** die erste Kompensationsleitung (17) und/oder die zweite Kompensationsleitung (19), wenn von Anspruch 2 abhängig, mit einem den zugeordneten Druckmittler (5, 7) nachbildenden druckinsensitiven Element (21, 23) verbunden ist, das den Prozessbedingungen in gleicher Weise wie der zugeordnete Druckmittler (5, 7) ausgesetzt ist.

4. Differenzdrucksensor (1) gemäß Anspruch 3,
**dadurch gekennzeichnet, dass** das druckinsensitive Element (21, 23) gemeinsam mit dem zugeordneten Druckmittler (5, 7) in einen Prozessanschluss (25, 27) integriert ist.

5. Differenzdrucksensor (1) gemäß Anspruch 3 oder 4,
**dadurch gekennzeichnet, dass** das druckinsensitive Element (21, 23) den zugeordneten Druckmittler (5, 7) ringförmig umgebend ausgebildet ist.

6. Differenzdrucksensor (1) gemäß einem der Ansprüche 3 bis 5,
**dadurch gekennzeichnet, dass** das druckinsensitive Element (21, 23) eine zum Prozess weisende Fläche einer Größe aufweist, die einer Größe einer zum Prozess weisenden Fläche des zugeordneten Druckmittlers (5, 7) entspricht, vorzugsweise mit ihr gleich ist.

7. Differenzdrucksensor (1) gemäß einem der vorhergehenden Ansprüche,
**dadurch gekennzeichnet, dass** die erste Messleitung (9) und die erste Kompensationsleitung (17) und/oder die zweite Messleitung (11) und die zweite Kompensationsleitung (19) jeweils in einer gemeinsamen als mechanischer Schutz ausgebildeten Ummantelung (13, 15) angeordnet sind.

8. Differenzdrucksensor (1) gemäß einem der vorhergehenden Ansprüche,
**dadurch gekennzeichnet, dass** die erste Messleitung (9) und die erste Kompensationsleitung (17) und/oder die zweite Messleitung (11) und die zweite Kompensationsleitung (19) einen identischen Leitungsquerschnitt und/oder eine identische Länge und/oder ein identisches Volumen und/oder eine identische thermische Leitfähigkeit und/oder eine identische Füllung und/oder aufweisen.

## Claims

1. Differential pressure sensor (1) having at least one differential pressure measurement cell (3), a first diaphragm seal (5), a first measuring line (9) for transmitting a first pressure (P1) acting on the first diaphragm seal (5) to a first side (10) of the differential pressure measurement cell (3), a second diaphragm seal (7), and a second measuring line (11) for transmitting a second pressure (P2) acting on the second diaphragm seal (7) to a second side (12) of the differential pressure measurement cell (3), **characterized in that**
the differential pressure sensor (1) has at least one first compensation line (17) for compensating for thermally and mechanically induced measurement errors, which first compensation line is arranged parallel to the first measuring line (9) and is connected to the second side (12) of the differential pressure measurement cell (3), wherein the first compensation line (17) has the same thermal and mechanical properties as the first measuring line (9), wherein the first measuring line (9) and the first compensation line (17) are arranged in such a manner that a temperature acting on the first measuring line (9) and/or a mechanical action acting on the first measuring line (9) act(s) equally on the compensation line (17).

2. Differential pressure sensor (1) according to Claim 1,
**characterized in that**
the differential pressure sensor (1) has a second compensation line (19) for compensating for thermally and mechanically induced measurement errors with the same thermal and mechanical properties as the second measuring line (11), which second compensation line is arranged parallel to the second measuring line (11), wherein the second measuring line (11) and the second compensation line (19) are arranged in such a manner that a temperature acting on the second measuring line (11) and/or a mechanical action acting on the second measuring line (11) act (s) equally on the compensation line (19) .

3. Differential pressure sensor (1) according to one of the preceding claims,
**characterized in that**
the first compensation line (17) and/or the second compensation line (19), if dependent on claim 2, is/are connected to a pressure-insensitive element (21, 23) which simulates the associated diaphragm seal (5, 7) and is exposed to the process conditions in the same manner as the associated diaphragm seal (5, 7).

4. Differential pressure sensor (1) according to Claim 3,
**characterized in that**
the pressure-insensitive element (21, 23) is integrated, together with the associated diaphragm seal (5, 7), into a process connection (25, 27).

5. Differential pressure sensor (1) according to Claim 3 or 4,
**characterized in that**
the pressure-insensitive element (21, 23) is designed to annually surround the associated diaphragm seal (5, 7).

6. Differential pressure sensor (1) according to one of Claims 3 to 5,
**characterized in that**
the pressure-insensitive element (21, 23) has a surface, facing the process, of a size which corresponds to a size of a surface of the associated diaphragm seal (5, 7) facing the process, and is preferably identical thereto.

7. Differential pressure sensor (1) according to one of the preceding claims,
**characterized in that**
the first measuring line (9) and the first compensation line (17) and/or the second measuring line (11) and the second compensation line (19) are respectively arranged in a common sheath (13, 15) designed as mechanical protection.

8. Differential pressure sensor (1) according to one of the preceding claims,
**characterized in that**
the first measuring line (9) and the first compensation line (17) and/or the second measuring line (11) and the second compensation line (19) have an identical line cross section and/or an identical length and/or an identical volume and/or an identical thermal conductivity and/or an identical filling.

## Revendications

1. Capteur de pression différentielle (1) comprenant au moins une cellule de mesure de pression différentielle (3), un premier transmetteur de pression (5), une première conduite de mesure (9) permettant de transmettre une première pression (P1) agissant sur le premier transmetteur de pression (5) sur une première face (10) de la cellule de mesure de pression différentielle (3), un second transmetteur de pression (7) ainsi qu'une seconde conduite de mesure (11) permettant de transmettre une seconde pression (P2) agissant sur le second transmetteur de pression (7) sur une seconde face (12) de la cellule de mesure de pression différentielle (3),
**caractérisé en ce que**
le capteur de pression différentielle (1) comporte au moins une première conduite de compensation (17) permettant de compenser des erreurs de mesure provoquées par des effets thermiques et mécaniques qui est montée parallèlement à la première conduite de mesure (9) et est reliée à la seconde face (12) de la cellule de mesure de pression différentielle (3), la première conduite de compensation (17) ayant les mêmes propriétés thermiques et mécaniques que la première conduite de mesure (9), la première conduite de mesure (9) et la première conduite de condensation (17) étant montées de sorte que la température agissant sur la première conduite de mesure (9) et/ou l'effet mécanique agissant sur la première conduite de mesure (9) agit(agissent) de manière similaire sur la conduite de compensation (17).

2. Capteur de pression différentielle (1) conforme à la revendication 1, **caractérisé en ce qu'**il comporte
une seconde conduite de compensation (19) permettant de compenser des erreurs de mesure provoquées par des effets thermiques et mécaniques ayant les mêmes propriétés thermiques et mécaniques que la seconde conduite de mesure (11) qui est montée parallèlement à cette seconde conduite de mesure (11), la seconde conduite de mesure (11) et la seconde conduite de compensation (19) étant montées de sorte que la température agissant sur la seconde conduite de mesure (11) et/ou l'effet mécanique agissant sur la seconde conduite de mesure (11) agit(agissent) de façon similaire sur la seconde conduite de compensation (19).

3. Capteur de pression différentielle (1) conforme à l'une des revendications précédentes,
**caractérisé en ce que**
la première conduite de compensation (17) et/ou le cas échéant la seconde conduite de compensation (19) est(sont) reliée(s) à un élément (21, 23) sensible à la pression reproduisant le transmetteur de pression (5, 7) associé, qui est soumis aux conditions de process de la même façon que le transmetteur de pression (5, 7) associé.

4. Capteur de pression différentielle (1) conforme à la revendication 3, **caractérisé en ce que**
l'élément sensible à la pression (21, 23) est intégré au transmetteur de pression (5, 7) associé dans un raccord de process (25, 27).

5. Capteur de pression différentielle (1) conforme à la revendication 3 ou 4,
**caractérisé en ce que**
l'élément sensible à la pression (21, 23) est un élément annulaire entourant le transmetteur de pression (5, 7) associé.

6. Capteur de pression différentielle (1) conforme à l'une des revendications 3 à 5,
**caractérisé en ce que**
l'élément sensible à la pression (21, 23) comporte une surface tournée vers le process dont la dimension correspond à la dimension de la surface tournée vers le process du transmetteur de pression (5, 7) associé et est de préférence égale à celle-ci.

7. Capteur de pression différentielle (1) conforme à l'une des revendications précédentes,
**caractérisé en ce que**
la première conduite de mesure (9) et la première conduite de compensation (17) et/ou la seconde conduite de mesure (11) et la seconde conduite de compensation (19) sont respectivement montées dans une enveloppe commune réalisée sous la forme d'une protection mécanique (13, 15).

8. Capteur de pression différentielle (1) conforme à l'une des revendications précédentes,
**caractérisé en ce que**
la première conduite de mesure (9) et la première conduite de compensation (17) et/ou la seconde conduite de mesure (11) et la seconde conduite de compensation (19) ont une section identique et/ou une longueur identique et/ou un volume identique et/ou une conductibilité thermique identique et/ou une capacité identique.
